# EUROPEAN PATENT SPECIFICATION

(11) **EP 1 637 569 B1**
(45) Date of publication and mention of the grant of the patent: **11.04.2007**
(21) Application number: 05020281.1
(22) Date of filing: 16.09.2005
(51) Int. Cl.: C09D 11/00, C09D 7/14

(54) **Method of manufacturing ink composition**
Verfahren zur Herstellung einer Tintenzusammensetzung
Méthode de fabrication d'une composition d'encre

(30) Priority: 17.09.2004 JP 2004271188
(43) Date of publication of application: 22.03.2006
(73) Proprietor: FUJIFILM Corporation, Minato-ku Tokyo (JP)
(72) Inventor: Aoshima, Keitaro c/o Fuji Photo Film Co., Ltd., Haibara-gun Shizuoka (JP)
(74) Representative: HOFFMANN EITLE

(56) References cited:
- US-A1- 2002 149 659

## Description

### Field of the Invention

The present invention relates to a method of manufacturing an ink composition.

### Background of the Invention

As image recording methods of forming an image on a recording medium, e.g., paper, on the basis of image data signals, an electrophotographic system, a sublimation type and a melting type heat transfer system, and an ink jet recording system are used. The electrophotographic system requires a process of forming an electrostatic latent image on a photosensitive drum by electric charge and exposure, so that the system is complicated and the apparatus is expensive. The price of the apparatus is inexpensive as for the heat transfer system, but the system uses ink ribbons, so that it is high in running cost and leaves wastes. On the other hand, in the ink jet recording system, since the apparatus is inexpensive and an image is directly formed on a recording medium by ejecting inks on only a required image area, so that ink can be efficiently used and running cost is low. Further, the ink jet recording system is low in noise and excellent as the image recording system.

Ink jet recording systems include, for example, a system of ejecting ink droplets by the pressure of vapor generated by the heat of an exothermic element, a system of ejecting ink droplets by the mechanical pressure pulse generated by piezoelectric elements, and a system of ejecting ink droplets containing charged particles by utilizing electrostatic field (refer to U.S. Patent 6,158,844 and Japanese Patent 3315334). Methods of ejecting ink droplets by vapor or mechanical pressure cannot control the flying direction of ink droplets and it is difficult to correctly land ink droplets on a desired point of a recording medium on due to distortion of ink nozzles and convection of air.

On the other hand, since a method of using electrostatic field controls the flying direction of ink droplets by electrostatic field, it is possible to correctly land ink droplets on a desired point. Accordingly, this system is useful for being capable of forming high quality image-formed matters (printed matters).

As the ink composition to be used in ink jet recording using electrostatic field, an ink composition comprising a dispersion medium and charged particles containing at least a coloring material (refer to U.S. Patent 5,952,048 and JP-A-8-291267) is used. An ink composition containing a coloring material can form inks of four colors of yellow, magenta, cyan and Chinese ink by changing coloring materials, and further special color inks of gold and silver can be formed. Accordingly, this system is useful since color image-formed matters (printed matters) can be produced.

In general, for giving electric charge to ink particles, a coloring material is dispersed in a dispersion medium, and then an electric charge generator is added to the dispersion. The added charge generator dissociates, and ions generated due to dissociation are adsorbed onto the surfaces of particle, whereby electric charge is generated on the ink particles. The quantity of the electric charge of ink particles is influenced by various factors, e.g., not only the addition amount of a charge generator but also the quantities of the dissociation and adsorption and, further, the distribution of particle sizes of particles (correlative to the total surface area of the particles). However, since these factors complicatedly fluctuate by aging, there is a problem that the quantity of electric charge varies during the time between just after manufacture and after preservation of the ink composition. Ink jet recording characteristics are influenced by the variation of the quantity of electric charge, so that it is preferred that the quantity of electric charge just after manufacture and after aging of the ink composition should be maintained constant.

### Summary of the Invention

An object of an illustrative, non-limiting embodiment of the invention is to provide a manufacturing method of an ink composition capable of maintaining the quantity of electric charge just after manufacture and after aging of the ink composition constant, and ensuring excellent ink jet recording characteristics.

As a result of eager studies to accomplish the above object, the present inventor has found that the influence of the above factors can be minimized by performing heating treatment after the addition of an electric charge generator, thus the invention has been achieved.

That is, the invention is as follows.
(1) A method of manufacturing an ink composition comprising the steps of: dispersing a coloring material in a dispersion medium to provide a dispersion; and adding an electric charge generator to the dispersion to form charged particles, wherein heating treatment (i.e., heating the dispersion) is carried out after the adding of the electric charge generator.

The invention can provide a manufacturing method of an ink composition capable of maintaining the quantity of electric charge just after manufacture and after aging of the ink composition constant, and ensuring excellent ink jet recording characteristics.

### Brief Description of the Drawings

Fig. 1 is a general view typically showing an illustrative, non-limitng example of ink jet recording apparatus for use in the invention.
Fig. 2 is an oblique view showing an illustrative, non-limiting example of the constitution of the ink jet head of ink jet recording apparatus for use in the invention (for simplification, the edge of the guard electrode at each ejecting part is not shown).
Fig. 3 is the cross section of side view of Fig. 2 showing the state of the distribution of charged particles in a case where a plurality of ejecting parts of the ink jet head are used (corresponding to the view X-X in Fig. 2).

Reference numerals and signs in Figs. I to 3 are described below.
G: Jetted ink droplets
P: Recording medium
Q: Ink flow
R: Charged particles
1: Ink jet recording apparatus
2, 2Y, 2M, 2C, 2K: Ejection heads
3: Ink circulatory system
4: Head driver
5: Position controlling means
6A, 6B, 6C: Carrier belt stretching rollers
7: Carrier belt
8: Carrier belt position detecting means
9: Electrostatic suction means
10: Destaticizing means
11: Mechanical means
12: Feed roller
13: Guide
14: Image fixing means
15: Guide
16: Recording medium position detecting means
17: Exhaust fan
18: Solvent vapor adsorbing material
38: Ink guide
40: Supporting bar
42: Ink meniscus
44: Insulating layer
46: First ejecting electrode
48: Insulating layer
50: Guard electrode
52: Insulating layer
56: Second ejecting electrode
58: Insulating layer
62: Floating conductive plate
64: Covering film
66: Insulating member
70: Ink jet head
72: Ink channel
74: Substrate
75, 75A, 75B: Openings
76, 76A, 76B: Ejecting parts
78: Ink guide part

### Detailed Description of the Invention

An ink composition manufactured according to the invention contains at least a dispersion medium, a coloring material and a charge generator.

### Dispersion medium:

A dispersion medium is a dielectric liquid having high electrical resistivity, specifically preferably 10¹⁰ Ω cm or higher. Supposing that a dispersion medium having low electrical resistivity is used, electrical continuity occurs between contiguous recording electrodes, so that such a dispersion medium is not preferred for the invention. The dielectric constant of a dielectric liquid is preferably 5 or less, more preferably 4 or less, and still more preferably 3.5 or less. When the dielectric constant of a dielectric liquid is in the above range, electric field effectively acts upon the charged particles in the dielectric liquid and preferred.

As the dispersion media for use in the invention, straight chain or branched aliphatic hydrocarbon, alicyclic hydrocarbon, aromatic hydrocarbon, halogen substitution products of these hydrocarbons, and silicone oil are exemplified. For example, hexane, heptane, octane, isooctane, decane, isodecane, decalin, nonane, dodecane, isododecane, cyclohexane, cyclooctane, cyclodecane, toluene, xylene, mesitylene, Isopar-C, Isopar-E, Isopar-G, Isopar-H, Isopar-L, Isopar-M and (Isopar is the trade name of Exxon), Shellsol 70 and Shellsol 71 (Shellsol is the trade name of Shell Oil Co.), Amsco OMS and Amsco 460 solvents (Amsco is the trade name of Spirits Co.), and KF-96L (trade name, manufactured by Shin-Etsu Chemical Co., Ltd., Silicone Division) can be used alone or as a mixture. The content of a dispersion medium in the total ink composition is preferably from 20 to 99 mass% (weight%). When the content of a dispersion medium is 20 mass% or more, particles containing a coloring material can be well dispersed in the dispersion medium, and 99 mass% or less can suffice the content of a coloring material.

### Coloring material:

Well-known dyes and pigments can be used as the coloring materials in the invention, and they can be selected according to the use and the purpose. For example, from the viewpoint of the tone of image-recorded matters (printed matters), it is preferred to use pigments (for example, see Ganryo Bunsan Anteika to Hyomen Shori Gijutsu Hyoka (Dispersion and Stabilization of Pigment and Techniques of Surface Treatment and Evaluation), First Edition, published by Gijutsu Joho Kyokai (Dec. 25, 2001) (hereinafter also referred to as non-patent literature 1). By changing coloring materials, inks of four colors of yellow, magenta, cyan and Chinese ink (black) can be formed. In particular, by using the pigments for use as offset printing inks and proofs, the same tone as the offset prints can be obtained, and so preferred.

As pigments for yellow inks, monoazo pigments, e.g., C.I. Pigment Yellow 1 and C.I. Pigment Yellow 74, disazo pigments, e.g., C.I. Pigment Yellow 12 and C.I. Pigment Yellow 17, non-benzidine series azo pigments, e.g., C.I. Pigment Yellow 180, azo lake pigments, e.g., C.I. Pigment Yellow 100, condensed azo pigments, e.g., C.I. Pigment Yellow 95, acid dye lake pigments, e.g., C.I. Pigment Yellow 115, basic dye lake pigments, e.g., C.I. Pigment Yellow 18, anthraquinone pigments, e.g., Flavanthrone Yellow, isoindolinone pigments, e.g., Isoindolinone Yellow 3RLT, quinophthalone pigments, e.g., Quinophthalone Yellow, isoindoline pigments, e.g., Isoindoline Yellow, nitroso pigments, e.g., C.I. Pigment Yellow 153, metal complex salt azomethine pigments, e.g., C.L Pigment Yellow 117, and isoindolinone pigments, e.g., C.I. Pigment Yellow 139 are exemplified.

As pigments for magenta inks, monoazo pigments, e.g., C.I. Pigment Red 3, disazo pigments, e.g., C.I. Pigment Red 38, azo lake pigments, e.g., C.I. Pigment Red 53:1 and C.I. Pigment Red 57:1, condensed azo pigments, e.g., C.I. Pigment Red 144, acid dye lake pigments, e.g., C.I. Pigment Red 174, basic dye lake pigments, e.g., C.I. Pigment Red 81, anthraquinone pigments, e.g., C.I. Pigment Red 177, thioindigo pigments, e.g., C.I. Pigment Red 88, perinone pigments, e.g., C.L Pigment Red 194, perylene pigments. e.g., C.I. Pigment Red 149, quinacridone pigments, e.g., C.I. Pigment Red 122, isoindolinone pigments, e.g., C.I. Pigment Red 180, and Alizarine lake pigments, e.g., C.I. Pigment Red 83 are exemplified.

As pigments for cyan inks, disazo pigments, e.g., C.L Pigment Blue 25, phthalocyanine pigments, e.g., C.I. Pigment Blue 15, acid dye lake pigments, e.g., C.I. Pigment Blue 24, basic dye lake pigments, e.g., C.I. Pigment Blue 1, anthraquinone pigments, e.g., C.I. Pigment Blue 60, and alkali blue pigments, e.g., C.I. Pigment Blue 18 are exemplified.

As pigments for Chinese inks, organic pigments, e.g., aniline black pigments, and iron oxide pigments, and carbon black pigments, e.g., furnace black, lamp black, acetylene black and channel black are exemplified.

Further, processed pigments typified by Microlith Pigments, e.g., Microlith-A, -K and -T can also be preferably used. The specific examples thereof include Microlith Yellow 4G-A, Microlith Red BP-K, Microlith Blue 4G-T, and Microlith Black C-T.

Various kinds of pigments can be used according to necessity, e.g., calcium carbonate and titanium oxide pigments as pigments for white inks, aluminum powders as pigments for silver inks, and copper alloys as pigments for golden inks.

It is preferred to use fundamentally one kind of pigment for one color from the point of the simplicity of manufacture of ink, but it is also preferred to use two or more pigments in combination in some cases for the purpose of adjusting the hue, such as the mixture of phthalocyanine with carbon black for black ink. Further, pigments may be subjected to surface treatment before use by well-known methods, e.g., rosin treatment (the above non-patent literature 1).

The pigment content in all the ink composition is preferably from 0.1 to 50 mass%. The content of 0.1 mass% or more is sufficient as the pigment content and sufficiently good coloring can be obtained in the printed matters, and when the content is 50 mass% or less, particles containing a coloring material can be well dispersed in a dispersion medium. The pigment content is more preferably from 1 to 30 mass%.

### Covering agent:

In the invention, it is preferred that coloring materials such as pigments are dispersed (to be made particles) in a dispersion medium in the state of being covered with a covering agent rather than to be directly dispersed (to be made particles). By covering with a covering agent, the electric charge of the coloring material is masked and desired charge characteristics can be obtained. In the invention, after ink jet recording on a recording medium ("a recording medium" means a medium on which an image is recorded, such as paper and the like), the medium is subjected to fixation with a heating means such as a heat roller, and the covering agent is melted by heat at this time and fixation is efficiently effected.

As the examples of covering agents, e.g., rosins, rosin-modified phenolic resin, alkyd resin, (meth)acrylic polymer, polyurethane, polyester, polyamide, polyethylene, polybutadiene, polystyrene, polyvinyl acetate, an acetal- modified product of polyvinyl alcohol, and polycarbonate are exemplified. Of these covering agents, from the easiness of formation of particles, polymers having a weight average molecular weight of from 2,000 to 1,000,000, and the degree of polydispersion (weight average molecular weight/number average molecular weight) of from 1.0 to 5.0 are preferred. Further, from the easiness of fixation, polymers having any one of a softening point, a glass transition point and a melting point of from 40 to 120°C are preferred.

The polymers particularly preferably used in the invention as the covering agent are polymers containing at least any one of the constitutional units represented by the following formulae (1) to (4).

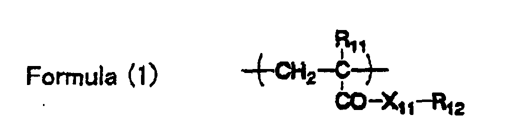

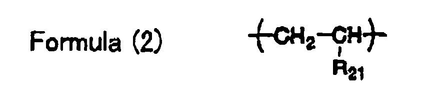

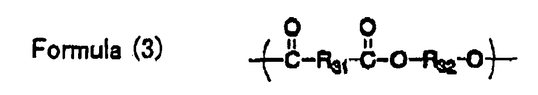

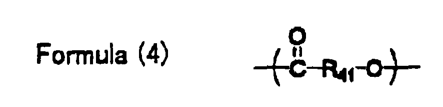

In the above formulae, X₁₁ represents an oxygen atom or -N(R₁₃)-; R₁₁ represents a hydrogen atom or a methyl group; R₁₂ represents a hydrocarbon group having from 1 to 30 carbon atoms; R₁₃ represents a hydrogen atom or a hydrocarbon group having from 1 to 30 carbon atoms; R₂₁ represents a hydrogen atom or a hydrocarbon group having from 1 to 20 carbon atoms; and R₃₁, R₃₂ and R₄₁ each represents a divalent hydrocarbon group having from 1 to 20 carbon atoms; and the hydrocarbon groups represented by R₁₂, R₂₁, R₃₁, R₃₂ and R₄₁ may have an ether bond, an amino group, a hydroxyl group or a halogen substituent.

A polymer containing a constitutional unit represented by formula (1) can be obtained by radical polymerization of a corresponding radical polymerizable monomer by known methods. As the radical polymerizable monomers to be used, (meth)acrylic esters, e.g., methyl (meth)acrylate, ethyl (meth)acrylate, propyl (meth)acrylate, butyl (meth)acrylate, hexyl (meth)- acrylate, octyl (meth)acrylate, 2-ethylhexyl (meth)acrylate, dodecyl (meth)acrylate, stearyl (meth)acrylate, cyclohexyl (meth)acrylate, phenyl (meth)acrylate, benzyl (meth)acrylate, and 2-hydroxyethyl (meth)acrylate; and (meth)acrylamides, e.g., N-methyl(meth)acrylamide, N-propyl(meth)acrylamide, N-phenyl(meth)acrylamide, and N,N-dimethyl(meth)acrylamide are exemplified.

A polymer containing a constitutional unit represented by formula (2) can be obtained by radical polymerization of a corresponding radical polymerizable monomer by known methods. As the radical polymerizable monomers to be used, e.g., ethylene, propylene, butadiene, styrene and 4-methylstyrene are exemplified.

A polymer containing a constitutional unit represented by formula (3) can be obtained by dehydration condensation of a corresponding dicarboxylic acid, or acid anhydride and diol by known methods. As the dicarboxylic acids to be used, succinic anhydride, adipic acid, sebacic acid, isophthalic acid, terephthalic acid, 1,4-phenylenediacetic acid and diglycolic acid are exemplified. As the diols to be used, ethylene glycol, 1,2-propanediol, 1,3-propanediol, 1,4- butanediol, 1,6-hexanediol, 1,10-decanediol, 2-butene- 1,4-diol, 1,4-cyclohexanediol, 1,4-cyclohexanedimethanol, 1,4-benzenedimethanol, and diethylene glycol are exemplified.

A polymer containing a constitutional unit represented by formula (4) can be obtained by dehydration condensation of a corresponding carboxylic acid having a hydroxyl group by known methods, or ring opening polymerization of a corresponding cyclic ester of a carboxylic acid having a hydroxyl group by known methods. As the carboxylic acids having a hydroxyl group or cyclic esters of a carboxylic acid having a hydroxyl group to be used, 6-hydroxyhexanoic acid, 11-hydroxyundecanoic acid, hydroxybenzoic acid, and ε-caprolactone are exemplified.

The polymers containing at least any one of the constitutional units represented by formulae (1) to (4) may be homopolymers of the constitutional units represented by formulae (1) to (4), or they may be copolymers with other constitutional units. These polymers may be used alone as the covering agents or two or more of these covering agents may be used in combination.

The covering agent content in the total ink composition is preferably in the range of from 0.1 to 40 mass%. The content of 0.1 mass% or more is sufficient as the covering agent content and sufficient fixation can be obtained, and when the content is 40 mass% or less, good particles containing a coloring material and a covering agent can be formed.

### Dispersant:

In the invention, a mixture of a coloring material and a covering agent is preferably dispersed (made particles) in a dispersion medium, and it is more preferred to use a dispersant (i.e., to disperse the mixture in the presence of a dipersant) to control particle sizes and inhibit particles from precipitating.

As the examples of preferred dispersants, surfactants typified by sorbitan fatty acid esters, e.g., sorbitan monooleate, and polyethylene glycol fatty acid esters, e.g., polyoxyethylene distearate are exemplified. In addition, e.g., copolymers of styrene and maleic acid, and amine-modified products of the copolymers, copolymers of styrene and (meth)acrylic compounds, (meth)acrylic polymers, copolymers of polyethylene and (meth)acrylic compounds, rosin, BYK-160, 162, 164, 182 (polyurethane polymers, manufactured by BYK Chemie), EFKA-401 and 402 (acrylic polymers, manufactured by EFKA Co.), and Solspers 17000 and 24000 (polyester polymers, manufactured by Zeneca Agrochemicals Co., Ltd.) are exemplified. From the viewpoint of the preservation stability of an ink composition for a long period of time, polymers having a weight average molecular weight of from 1,000 to 1,000,000, and the degree of polydispersion (weight average molecular weight/number average molecular weight) of from 1.0 to 7.0 are preferred. To use graft polymers or block polymers is most preferred.

The polymers particularly preferably used in the invention are graft polymers containing at least a polymer component comprising at least either one constitutional unit represented by the following formula (5) or (6), and a polymer component containing a constitutional unit represented by the following formula (7) at least as a graft chain. 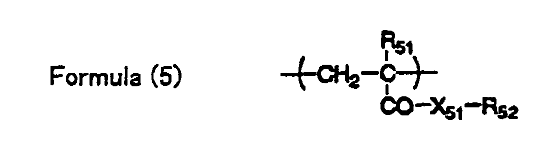 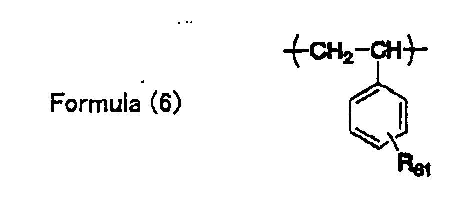 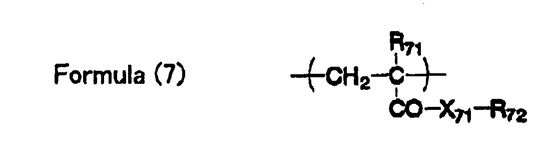 wherein X₅₁ represents an oxygen atom or -N(R₅₃)-; R₅₁ represents a hydrogen atom or a methyl group; R₅₂ represents a hydrocarbon group having from 1 to 10 carbon atoms; R₅₃ represents a hydrogen atom or a hydrocarbon group having from 1 to 10 carbon atoms; R₆₁ represents a hydrogen atom, a hydrocarbon group having from 1 to 20 carbon atoms, a halogen atom, a hydroxyl group, or an alkoxyl group having from 1 to 20 carbon atoms; X₇₁ represents an oxygen atom or -N(R₇₃)-; R₇₁ represents a hydrogen atom or a methyl group; R₇₂ represents a hydrocarbon group having from 4 to 30 carbon atoms; and R₇₃ represents a hydrogen atom or a hydrocarbon group having from 1 to 30 carbon atoms; and the hydrocarbon groups represented by R₅₂ and R₇₂ may contain an ether bond, an amino group, a hydroxyl group or a halogen substituent.

The above graft polymer can be obtained by polymerizing a radical polymerizable monomer corresponding to the monomer represented by formula (7) preferably in the presence of a chain transfer agent, introducing a polymerizable functional group to the terminals of the obtained polymer, and further copolymerizing with a radical polymerizable monomer corresponding to the monomer represented by formula (5) or (6).

As the radical polymerizable monomers corresponding to formula (5), e.g., (meth)acrylic esters, e.g., methyl (meth)acrylate, ethyl (meth)acrylate, propyl (meth)acrylate, butyl (meth)acrylate, hexyl (meth)acrylate, cyclohexyl (meth)acrylate, phenyl (meth)acrylate, benzyl (meth)acrylate, and 2-hydroxyethyl (meth)acrylate, and (meth)acrylamides, e.g., N-methyl(meth)acrylamide, N-propyl(meth)acrylamide, N-phenyl(meth)acrylamide, and N,N-dimethyl(meth)acrylamide are exemplified,

As the radical polymerizable monomers corresponding to formula (6), e.g., styrene, 4-methylstyrene, chlorostyrene and methoxystyrene are exemplified.

As the radical polymerizable monomers corresponding to formula (7), e.g., hexyl (meth)acrylate, octyl (meth)acrylate, 2-ethylhexyl (meth)acrylate, dodecyl (meth)acrylate and stearyl (meth)acrylate are exemplified.

As the specific examples of these graft polymers, the polymers represented by the following formulae are exemplified.

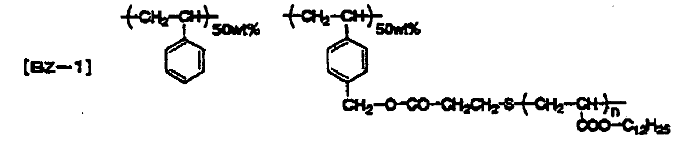

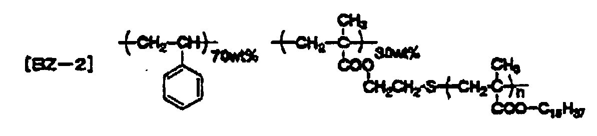

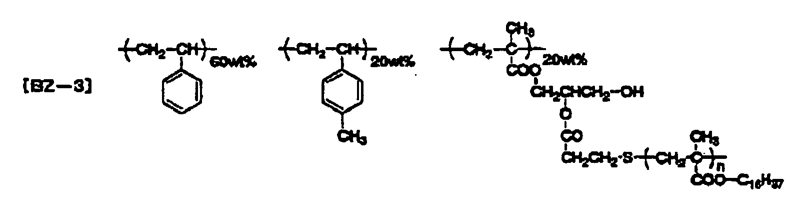

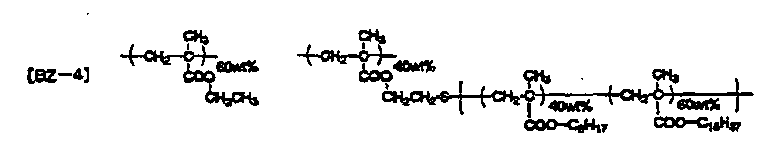

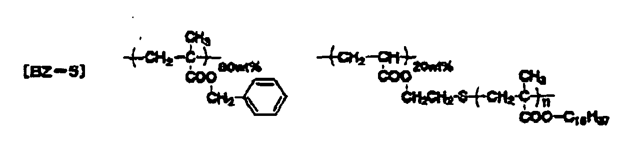

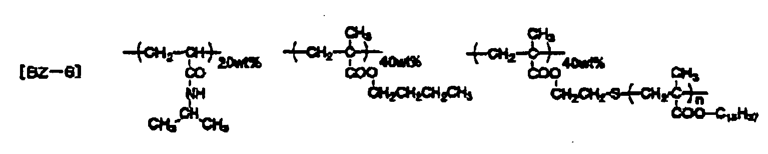

The graft polymers containing a polymer component comprising at least either one constitutional unit represented by formula (5) or (6), and a polymer component containing a constitutional unit represented by formula (7) at least as the graft chain may contain a constitutional unit represented by formula (5) and/or (6), and a constitutional unit represented by formula (7) alone, or may contain other constitutional unit. The preferred composition ratio of the polymer component having a graft chain to other polymer component is from 10/90 to 90/10. When the composition ratio is in this range, a good particle forming property can be obtained, so that a desired particle size is easily obtained and preferred. These polymers may be used alone as a dispersant, or two or more polymers may be used in combination.

The content of a dispersant in the total ink composition is preferably in the range of from 0.01 to 30 mass%. When the content of a dispersant is in this range, a good particle forming property can be obtained, so that a desired particle size can be obtained.

### Electric charge generator:

In the invention, it is preferred to disperse a mixture of a coloring material and a covering agent in a dispersion medium (to make particles) with a dispersant, and an electric charge generator is used in combination to control the quantity of the electric charge of particles.

As preferred electric charge generators, metal salt of organic carboxylic acid, e.g., zirconium naphthenate and zirconium octanoate, ammonium salt of organic carboxylic acid, e.g., tetramethylammonium stearate, metal salt of organic sulfonic acid, e.g., sodium dodecylbenzenesulfonate and magnesium dioctylsulfosuccinate, ammonium salt of organic sulfonic acid, e.g., tetrabutylammonium toluenesulfonate, a polymer having a carboxylic acid group on the side chain, e.g., a polymer having a carboxylic acid group obtained by modifying a copolymer of styrene and maleic anhydride with amine, etc., a polymer having a carboxylate anionic group on the side chain, e.g., a copolymer of stearyl methacrylate and tetramethyl- ammonium methacrylate, etc., a polymer having a nitrogen atom on the side chain, e.g., a copolymer of styrene and vinylpyridine, etc., and a polymer having an ammonium group on the side chain, e.g., a copolymer of butyl methacrylate and N-(2-methacryloyloxyethyl)-N,N,N-trimethylammonium tosylate, etc., are exemplified. The electric charge given to particles may be positive charge or negative charge. The content of a charge generator in the total ink composition is preferably from 0.0001 to 10 mass%.

### Other components:

Further, antibacterial agents for preventing rottenness and surfactants for controlling the surface tension can be used in the invention, according to purpose.

### Manufacture of charged particles:

An ink composition containing charged particles in the invention can be manufactured with the above components by dispersing (making particles) a coloring material, preferably with a covering agent. As the methods of dispersion (making particles), e.g., the following methods are exemplified.
(1) After mixing a coloring material and a covering agent in advance, the mixture is dispersed (made particles) with a dispersant and a dispersion medium, and then an electric charge generator is added.
(2) A coloring material, a covering agent, a dispersant and a dispersion medium are dispersed (made particles) at the same time, and then an electric charge generator is added.
(3) A coloring material, a covering agent, a dispersant, an electric charge generator and a dispersion medium are dispersed (made particles) simultaneously.

Apparatus such as a kneader, a dissolver, a mixer, a high speed disperser, a sand mill, a roll mill, a ball mill, an attritor, and a beads mill (see non-patent literature 1) are used in mixing and dispersing.

As described above, heating treatment is performed after the addition of an electric charge generator in the invention. By the heating treatment, the influence of factors that are liable to fluctuate the quantity of electric charge can be restrained in advance.

The temperature of the heating treatment is, e.g., from 35 to 150°C, preferably from 40 to 100°C. In this range of the heating treatment temperature, the influences of the above factors can be minimized, and at the same time undesirable melting and agglomeration of the charged particles can be prevented. The time of heating treatment is, e.g., from 1 minute to 10 hours, preferably from 5 minutes to 6 hours.

Heating treatment is preferably performed early on after the addition of an electric charge generator, if possible, for example, in the range of a month from immediately after the addition of an electric charge generator, more preferably in the range of a week from just after the addition of an electric charge generator.

The form of the heating treatment is not particularly restricted but, for example, it is preferred to use the heating vessels and units shown in the following (1) to (3). The form of (1) is preferred above all.
(1) A dispersion comprising a coloring material and a dispersion medium, and an electric charge generator are put in a vessel equipped with a stirrer and a heating unit (made of stainless steel, glass, plastics and the like), and then the vessel is heated with stirring.
(2) A dispersion comprising a coloring material and a dispersion medium, and an electric charge generator are put in a vessel (made of stainless steel, glass, plastics and the like), and then the vessel is heated with a heat source, such as hot water or hot air with mechanically shaking the vessel.
(3) A dispersion comprising a coloring material and a dispersion medium, and an electric charge generator are put in a vessel (made of stainless steel, glass, plastics and the like), and then the vessel is heated with a heat source, such as hot water or hot air with standing still.

For expediting the effect of the invention, surfactants and polar solvents may be added to an ink composition.

As preferred surfactants, anionic activators, e.g., sodium dodecylbenzenesulfonate, sodium dioctylsulfosuccinate and sodium lauryl sulfate, cationic activators, e.g., lauryl- trimethylammonium chloride and cetyltrimethylammonium bromide, and nonionic activators, e.g., polyethylene glycol monolaurate, are exemplified.

The addition amount of surfactants is preferably from 0.0001 to 10 mass% to the ink composition.

As preferred polar solvents, water, alcohols, e.g., propanol, octanol and dodecanol, esters, e.g., butyl acetate and dioctyl phthalate, cyclohexanone, N,N-dimethylacetamide and dimethyl sulfoxide are exemplified. Polar solvents having a boiling point of 100°C or higher are preferred above all.

The addition amount of polar solvents is preferably from 0.0001 to 10 mass% to the ink composition.

For performing ink jet recording by using the ink composition obtained according to the invention, it is preferred to prepare an ink composition for initial charge and an ink composition for replenishment, and replenish the ink composition for replenishment to supply the reduction in concentration of charged particles due to ejection of the ink composition for initial charge, and at the same time, make the concentration of the solids content of the replenishment ink composition higher than that of the ink composition for initial charge.

The concentrations of the solids contents of an ink composition for initial charge and a replenishing ink composition are not particularly restricted so long as the above condition is satisfied, but it is preferred that the concentration of the solids content of the ink composition for initial charge is from 1 to 40 mass%, the concentration of the replenishment ink composition is from 2 to 60 mass%, and the ratio of the concentrations of the solids contents of the initial charge ink composition and the replenishment ink composition, the latter/the former, is set at 1.05 to 10.0, preferably from 1.1 to 7.0. By satisfying these conditions, a better ejecting property can be obtained, and the mixing failure of the ink composition for initial charge and the replenishment ink composition does not occur. The preferred solids content concentration of an ink composition for initial charge is from 3 to 30 mass%, and that of a replenishment ink composition is from 5 to 50 mass%.

The concentration of the solids content can be computed on the basis of the change of mass by heating an ink composition to remove the volatile component. For example, it can be computed on the basis of the change of mass by drying an ink composition on a hot plate at 145°C for 2 hours.

In the invention, the electric conductivity at 20°C of an ink composition for initial charge is preferably from 10 to 50,000 pS/cm (from 1 to 5,000 nS/m), and that of an ink composition for replenishment is preferably from 50 to 100,000 pS/cm (from 1 to 10,000 nS/m). In these ranges of the electric conductivities of respective ink compositions, a good ejecting property can be obtained. By making the electric conductivity of a replenishment ink composition higher than that of an ink composition for initial charge, an ejecting property can be maintained for long hours, so that more preferred. The electric conductivity of an ink composition can be adjusted by the kinds and the addition amounts of a dispersion medium and an electric charge generator to be used.

The volume average particle size of charged particles in the invention is preferably from 0.20 to 5.0 µm. When the volume average particle size of charged particles is in this range, a good ejecting property can be obtained. The volume average particle size of charged particles can be measured, for example, by a centrifugal precipitation method with an apparatus, e.g., ultra-centrifugal automatic particle size distribution-measuring apparatus CAPA-700 (manufactured by HORIBA LTD.). The volume average particle size of charged particles can be adjusted by the kind and addition amount of a dispersant and the apparatus used for dispersing (making particles).

In the invention, the coefficient of viscosity of an ink composition at 20°C is preferably in the range of from 0.5 to 50 mPa's. When the coefficient of viscosity is in this range, a good ejecting property can be obtained. The coefficient of viscosity of an ink composition can be adjusted by the kinds and the addition amounts of a dispersion medium and polymer components, e.g., a dispersant, dissolved in the dispersion medium to be used. The coefficient of viscosity of an ink composition can also be adjusted by the use of a surfactant.

### Ink jet recording apparatus:

In the invention, the above ink composition is recorded on a recording medium by an ink jet recording system. In the invention, it is preferred to use an ink jet recording system utilizing electrostatic field. An ink jet recording system utilizing electrostatic field is a system of applying voltage between a control electrode and a back electrode in rear of a recording medium to thereby concentrate the charged particles of an ink composition at the ejecting position by the electrostatic force, and ejecting the ink composition from the ejecting position to the recording medium. The voltage applied between a control electrode and a back electrode is such that, for example, the control electrode is a positive electrode and the back electrode is a negative electrode when the charged particles are positively charged. The same effect can be obtained by charging a recording medium in place of applying voltage to a back electrode.

As an ink ejecting system, for example, a system of ejecting ink from a needle-like tip such as an injector is known, and recording can be performed with the ink composition of the invention. However, the replenishment of charged particles after concentration and ejection of charged particles is difficult in this system, so that it is difficult to perform recording stably for a long period of time. When ink is circulated for forcedly replenishing charged particles, since the ink overflows the tip of an injection needle according to the method, the shape of meniscus at the tip of the injection needle of ejection position is not stable, so that stable recording is difficult, and so this system is suitable for short-term recording.

On the other hand, a method of capable of circulating an ink composition without overflowing the ink composition an ejection opening is preferably used. For example, according to a system wherein ink is circulated in an ink chamber having an ejection opening and concentrated ink droplets are ejected from the tip of an ink guide present in the ejection opening, whose tip faces on the side of a recording medium, by the application of voltage to a control electrode formed around the ejection opening, recording can be performed stably for a long period of time, since the replenishment of charged particles by the circulation of the ink and the meniscus stability at the ejecting position can be compatible. Further in the system, since the exposure of the ink to the air is limited only to the ejection opening, evaporation of the solvent is inhibited and physical characteristics of the ink are stabilized, so that the system can be very preferably used in the invention.

An example of the structure of an ink jet recording apparatus suitable to use the ink composition of the invention is described below.

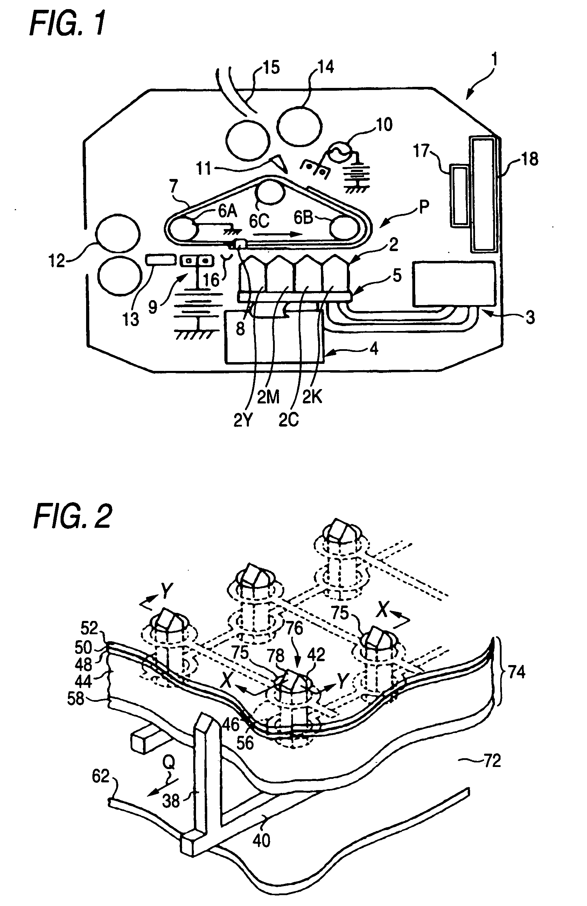

In the first place, the outline of the apparatus of performing four-color printing on one side of a recording medium shown in Fig. 1 is described. Ink jet recording apparatus 1 shown in Fig. 1 is equipped with ink circulatory system 3 for feeding inks to ejection head 2 comprising ejection heads 2C, 2M, 2Y and 2K of four colors for performing full color image formation and for recovering the inks from ejection head 2, head driver 4 for driving ejection head 2 by the output of the outside apparatus such as a computer and RIP not shown, and position controlling means 5. Ink jet recording apparatus 1 is further equipped with carrier belt 7 stretching on three rollers 6A, 6B and 6C, carrier belt position detecting means 8 consisting of an optical sensor and the like capable of detecting the position of carrier belt 7 in the width direction, electrostatic suction means 9 for maintaining recording medium P on carrier belt 7, and destaticizing means 10 and mechanical means 11 for peeling away recording medium P from carrier belt 7 after conclusion of image formation. On the upstream and the downstream of carrier belt 7 are arranged feed roller 12 and guide 13 for feeding recording medium P from a stocker not shown to carrier belt 7, and image fixing means 14 and guide 15 for fixing the inks on recording medium P after being peeled and carrying the recording medium to a stocker of discharged paper not shown. In the inside of ink jet recording apparatus 1 are arranged detecting means 16 for detecting the position of recording medium P at the facing position to ejection head 2 with carrier belt 7 between, a solvent collecting part comprising exhaust fan 17 for collecting the vapor of the solvent occurring from the ink composition, and solvent vapor adsorbing material 18, and the vapors in the inside of the apparatus are exhausted through the collecting part.

As feed rollers 12, well-known rollers can be used, and feed rollers 12 are arranged so that the feeding ability of recording medium P is increased. It is preferred to remove dirt and paper powder adhered on recording medium P. Recording medium P fed by feed rollers 12 is carried to carrier belt 7 through guide 13. The back surface of carrier belt 7 (preferably a metal back surface) is provided via roller 6A. Recording medium P carried is electrostatically adsorbed on the carrier belt by electrostatic suction means 9. In Fig. 1, electrostatic suction is performed by a Scorotron charger connected to negative high voltage power supply. Recording medium P is electrostatically sucked on carrier belt 7 without floatation by electrostatic suction means 9 and, at the same time, the surface of recording medium P is uniformly charged. The electrostatic suction means is also utilized as a charging means of recording medium P in Fig. 1, but a charging means may be provided separately. Charged recording medium P is carried to the ejection head part by means of carrier belt 7, and electrostatic ink jet image formation is performed by piling recording signal voltage with charged potential as bias. Image-recorded recording medium P is destaticized by destaticizing means 10, peeled away from carrier belt 7 by mechanical means 11, and carried to the fixing part. Peeled recording medium P is carried to image fixing means 14 and fixed. The fixed recording medium P is discharged to a stocker of discharged paper not shown through guide 15. The ink jet recording apparatus is also equipped with a collecting means of the vapor of the solvent occurring from an ink composition. The collecting means comprises solvent vapor adsorbing material 18, the air containing the solvent vapor in the apparatus is introduced into the adsorbing material by exhaust fan 17, and the vapor is collected by adsorption and exhausted out of the apparatus. The ink jet recording apparatus is not limited to the above example, and the number, shape, relative arrangement and charge polarity of constitutional devices, e.g., rollers and a charger can be arbitrarily selected. Four-color imaging is described in the above system, but the system may be a more multicolored system in combination with light-colored inks and special color inks.

The ink jet recording apparatus used in the above ink jet printing method is equipped with ejection head 2 and ink circulatory system 3, and ink circulatory system 3 may further comprise an ink tank, an ink circulating unit, an ink concentration controlling unit and an ink temperature controlling unit, and the ink tank may be equipped with a stirrer.

As ejection head 2, a single channel head, a multi- channel head or a full line head can be used, and main scanning is performed by the rotation of carrier belt 7.

An ink jet head preferably used in the invention is an ink jet system to perform ejection by increasing the concentration of ink in the vicinity of the opening by the electrophoresis of charged particles in an ink channel, and ejection of ink droplets is performed by electrostatic suction force mainly originating in a recording medium or the facing electrode arranged in rear of a recording medium. Therefore, when the recording medium or the facing electrode does not face to the ejection head, or when voltage is not applied to the recording medium or the facing electrode although the recording medium or the facing electrode is positioned facing to the head, ink droplets are not ejected and the inside of the apparatus does not become dirty even if voltage is applied to the ejecting electrode or vibration is given by error.

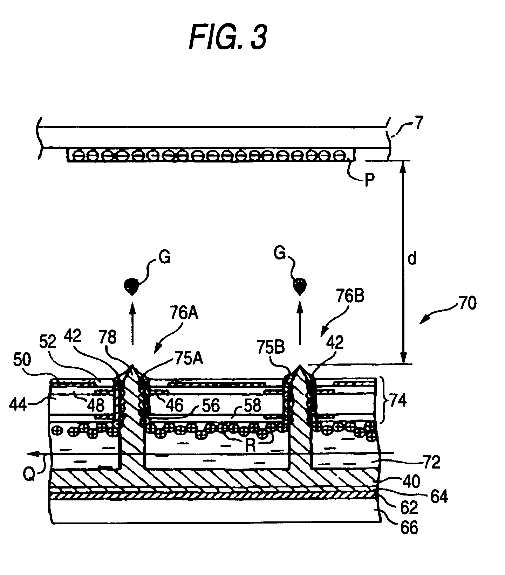

The ejection heads preferably used in the above ink jet recording apparatus are shown in Figs. 2 and 3. As shown in Figs. 2 and 3, ink jet head 70 comprises electrical insulating substrate 74 constituting the upper wall of ink channel 72 forming one way ink flow Q, and a plurality of ejecting parts 76 ejecting ink toward recording medium P. Ink guide part 78 to guide ink droplets G jetting from ink channel 72 to recording medium P is provided in each ejecting part 76, opening 75 through which ink guide part 78 is built is formed on substrate 74, and ink meniscus 42 is formed between ink guide part 78 and the inner wall of opening 75. The gap d between ink guide part 78 and recording medium P is preferably from 200 to 1,000 µm or so. Ink guide part 78 is fixed on supporting bar 40 at the lower side.

Substrate 74 has insulating layer 44 electrically insulating two ejecting electrodes by separating at a prescribed space, first ejecting electrode 46 formed on the upper side of insulating layer 44, insulating layer 48 covering first ejecting electrode 46, guard electrode 50 formed on the upper side of insulating layer 48, and insulating layer 52 covering guard electrode 50. In addition, substrate 74 has second ejecting electrode 56 formed on the lower side of insulating layer 44, and insulating layer 58 covering second ejecting electrode 56. Guard electrode 50 is provided to prevent the electric fields of the contiguous ejecting parts from being influenced by the voltage applied to first ejecting electrode 46 and second ejecting electrode 56.

Floating conductive plate 62 is provided in ink jet head 70 in an electrically floating state. Floating conductive plate 62 constitutes the bottom of ink channel 72 and, at the same time, migrates upward (i.e., toward the side of the recording medium) ink particles R (charged particles) in ink channel 72 positively charged by induced voltage steadily generating by the pulse-like ejecting voltage applied to first ejecting electrode 46 and second ejecting electrode 56. Further, electrically insulating covering film 64 is formed on the surface of floating conductive plate 62 to whereby prevent the physical properties and the composition of ink from becoming labile by the application of electric charge to the ink, etc. The electric resistance of the electrical insulating covering film is preferably 10¹²Ω·cm or more, more preferably 10¹³Ω·cm or more. It is preferred that the insulating covering film is anticorrosive to ink, by which floating conductive plate 62 is prevented from being corroded by ink. Floating conductive plate 62 is covered with insulating member 66 from the down side. Floating conductive plate 62 is completely electrically insulated by this constitution.

Floating conductive plate 62 is present one or more per one head unit (for example, in a case where there are four heads of C, M, Y and K, each head has at least one floating conductive plate, and there is no case where C and M head units have a common floating conductive plate).

As shown in Fig. 3, for recording on recording medium P by ejecting ink droplets from ink jet head 70, ink flow Q is generated by circulating the ink in ink channel 72, and prescribed voltage (e.g., +100 V) is applied to guard electrode 50. Further, positive voltage is applied to first ejecting electrode 46, second ejecting electrode 56 and recording medium P (when gap d is 500 µm, to form the potential difference of from 1 to 3.0 kV or so is a standard) so as to form ejecting electric field among first ejecting electrode 46, second ejecting electrode 56 and recording medium P by which positively charged particles R in ink droplets G guided by ink guide part 78 and jetted from opening 75 are attracted to recording medium P.

When pulse voltage is applied to first ejecting electrode 46 and second ejecting electrode 56 in this state according to image signal, ink droplets G heightened in concentration of charged particles are ejected from opening 75 (for example, when the initial charged particle concentration is from 3 to 15%, the charged particle concentration of ink droplets G becomes 30% or more).

At that time, the values of voltage applied to first ejecting electrode 46 and second ejecting electrode 56 are in advance adjusted so that ink droplets G are ejected only when pulse voltages are applied to both first ejecting electrode 46 and second ejecting electrode 56.

Thus when positive pulse voltages are applied, ink droplets G are guided by ink guide part 78 and jetted from opening 75 and adhered to recording medium P, at the same time, positive induced voltage is generated in floating conductive plate 62 by positive voltages applied to first ejecting electrode 46 and second ejecting electrode 56. Even if the voltages applied to first ejecting electrode 46 and second ejecting electrode 56 are pulse voltages, the induced voltage is almost steady voltage. Accordingly, positively charged particles R in ink channel 72 get a force to be migrated upward by the electric field formed among floating conductive plate 62, guard electrode 50 and recording medium P, so that the concentration of charged particles R becomes high in the vicinity of substrate 74. As shown in Fig. 3, when many ejecting parts (that is, channels for ejecting inks) are used, the number of charged particles necessary for ejection increases, but the number of first ejecting electrode 46 and second ejecting electrode 56 used increases, so that the induced voltage induced by floating conductive plate 62 becomes high, as a result the number of charged particles R migrating toward the recording medium also increases.

In the above, the example of positively charged colored particles is described, but colored particles may be negatively charged. In this case, the above charge polarities are all inversed polarities.

In the invention, it is preferred to fix inks by any appropriate heating means after ink ejection to a recording medium. As heating means, a contact type heating apparatus, e.g., a heat roller, a heat block and belt heating, and a non-contact type heating apparatus, e.g., a drier, an infrared lamp, a visible ray lamp, an ultraviolet lamp, and a hot air oven, can be used. These heating apparatus are preferably linking and integrated with an ink jet recording apparatus. The temperature of a recording medium at fixing time is preferably in the range of from 40 to 200°C for easiness of fixation. The fixing time is preferably in the range of from 1 µsec to 20 sec.

### Replenishment of ink composition:

In an ink jet recording system utilizing electrostatic field, the charged particles in an ink composition are ejected in a concentrated state. Accordingly, when the ejection of an ink composition is performed for hours, the charged particles in the ink composition are reduced and the electric conductivity of the ink composition lowers. Further, the proportion of the electric conductivity of the charged particles and the electric conductivity of the ink composition changes. In addition, since charged particles having greater particle sizes are liable to be ejected prior to charged particles having smaller particle sizes, the average diameter of charged particles becomes small. Further, the content of the solid matters in the ink composition changes, so that the coefficient of viscosity also changes.

As a result of the fluctuation of the values of physical properties, ejection failure, the reduction of the optical density of recorded images and bleeding of inks occur. Therefore, by replenishing an ink composition for replenishment having higher concentration (higher in the solids content concentration) than an ink composition for initial charge in an ink tank, the reduction of the concentration of charged particles can be prevented, and the electric conductivity of the ink composition can be maintained in a constant range. Further, the average particle size and the coefficient of viscosity can also be maintained. Moreover, ink ejection can be performed for long hours stably by maintaining the values of physical properties of an ink composition in constant ranges. It is preferred to perform replenishment at this time mechanically or manually by detecting the values of physical properties such as electric conductivity and optical density of the ink solution in use and computing the ullage. Replenishment may also be performed mechanically or manually by computing the amount of ink composition to be used on the basis of the image data.

### Recording medium:

A variety of recording media can be used in the invention according to purposes. For example, by using papers, plastic films, metals, papers laminated or deposited with plastics or metals, and plastic films laminated or deposited with metals, directly printed products can be obtained by ink jet recording. In addition, an offset printing plate can be obtained by using a surface-roughened metal support such as aluminum Further, by using plastic supports, color filters for a flexo printing plate and a liquid crystal display. The shapes of recording media may be sheet-like planar shape or may be three dimensional as cylindrical shape. When a silicone wafer and a wiring substrate are used as recording media, the invention can be applied to the manufacture of semiconductor and printed wiring substrates.

By the combination of the above-described ink compositions, ink jet recording apparatus and replenishment of ink compositions, image-recorded matters free of ink bleeding, having high image density and high image quality can be obtained stably for hours.

### Examples

The invention will be described with referring to Examples, but the invention is not limited thereto.

### EXAMPLE 1

### Materials used:

The following materials were used in Example 1.
· Cyan pigment (a coloring material): a phthalocyanine pigment, C.I. Pigment Blue (15:3) (LIONOL BLUE FG-7350, manufactured by Toyo Ink Mfg. Co., Ltd.)
· Covering agent (AP-1)
· Dispersant (BZ-2)
· Electric charge generator (CT-1)
· Dispersion medium: Isopar G (manufactured by Exxon)

The structures of covering agent (AP-1), dispersant (BZ-2) and electric charge generator (CT-1) are shown below.

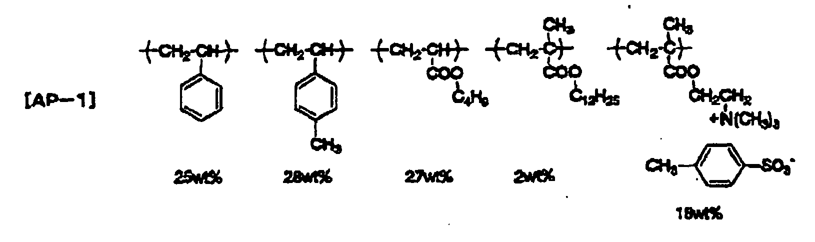

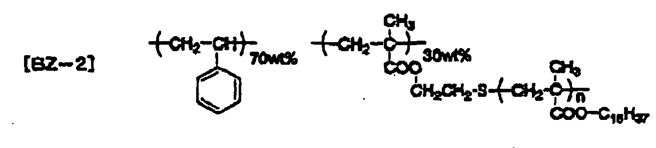

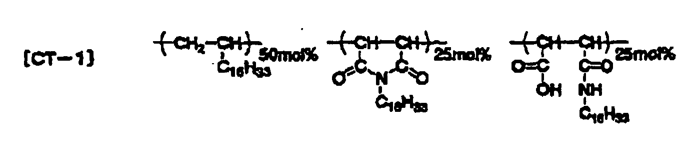

Covering agent (AP-1) was obtained by radical polymerizing styrene, 4-methylstyrene, butyl acrylate, dodecyl methacrylate and 2-(N,N-dimethylamino)ethyl methacrylate with a well-known polymerization initiator, and further reacting with methyl tosylate. The weight average molecular weight of (AP-1) was 15,000, the degree of polydispersion (weight average molecular weight/number average molecular weight) was 2.7, the glass transition point (a mid point) was 51°C, and the softening point by a strain gauge method was 46°C.

Dispersant (BZ-2) was obtained by radical polymerizing stearyl methacrylate in the presence of 2-mercaptoethanol, and further reacting with methacrylic acid anhydride to obtain a stearyl methacrylate polymer having methacryloyl groups at terminals (weight average molecular weight: 7,600), and radical polymerizing the stearyl methacrylate polymer and styrene. The weight average molecular weight of (BZ-2) was 110,000.

Electric charge generator (CT-1) was obtained by reacting a copolymer of 1-octadecene and maleic anhydride with 1-hexadecylamine. The weight average molecular weight of(CT-1) was 17,000.

### Manufacture of ink composition (DC-1S):

Ten (10) grams of a cyan pigment and 20 g of covering agent (AP-1) were put in a desk type kneader PBV-0.1 (manufactured by Irie Shokai Co.) and mixed with heating for 2 hours after setting the temperature of heater at 100°C. The obtained mixture (30 g) was coarsely pulverized with a Trio-Blender (manufactured by Trio Science Co., Ltd.), and further finely pulverized with an SK-M10 type sample mill (manufactured by Kyoritsu Rikoh Co., Ltd.). The obtained finely pulverized product (30 g) was preliminarily dispersed with 7.5 g of dispersant (BZ-2), 75 g of Isopar G and glass beads having a diameter of about 3.0 mm in a paint shaker (manufactured by Toyo Seiki Seisaku-Sho, Ltd.). After removing the glass beads, the preliminarily dispersed product was dispersed (made particles) with zirconia ceramic beads having a diameter of about 0.6 mm in Type KDL DYNO-MILL (manufactured by Shinmaru Enterprises Corporation) with maintaining the inner temperature at 25°C for 5 hours, subsequently at 45°C for 5 hours, at an engine speed of 2,000 rpm. The zirconia ceramic beads were removed from the obtained dispersion. The dispersion was put in a vessel of stainless steel equipped with a stirrer and a heating unit, 316 g of Isopar G and 0.6 g of electric charge generator (CT-1) were added to the dispersion, and then the reaction mixture was subjected to the heating treatment (stirring the mixture at 50°C for 3 hours) to obtain ink composition (DC-1S).

Immediately after manufacture and after preservation for six months at room temperature, the electric conductivities of ink composition (DC-1S) at 20°C with respect to the ink composition as a whole and the charged particles were measured respectively. The results obtained are shown in Table 1 below. The electric conductivities were measured with LCR meter (AG-4311, manufactured by Ando Electric Co., Ltd.) and electrode for liquid (LP-05 type, manufactured by Kawaguchi Electric Works Co., Ltd.), and on the conditions of applied voltage of 5 V and frequency of 1 kHz.

### EXAMPLE 2

An ink composition was prepared in the same manner as in Example 1 except that the heating treatment conditions were changed to 50°C and 2 hours, and 1.5 g of sodium dioctylsulfosuccinate was further added to the ink composition. The results obtained are shown in Table 1.

### EXAMPLES 3

An ink composition was prepared in the same manner as in Example 1 except that the heating treatment conditions were changed to 45°C and 3 hours, and 0.5 g of water and 4.0 g of dodecanol were further added to the ink composition. The results obtained are shown in Table 1.

### COMPARATIVE EXAMPLE 1

An ink composition was prepared in the same manner as in Example 1 except that the heating treatment after the addition of the electric charge generator was not performed. The results obtained are shown in Table 1.

**TABLE 1**

| | Example 1 | Example 2 | Example 3 | Comparative Example 1 |
|---|---|---|---|---|
| Additives | None | 1.5 g of sodium dioctylsulfosuccinate | 0.5 g of water and 4.0 g of dodecanol | None |
| Heating treatment | 50°C, 3 hours | 50°C, 2 hours | 45°C, 3 hours | None |
| Electric conductivity of ink composition just after manufacture | 95 nS/m | 90 nS/m | 100 nS/m | 100 nS/m |
| Electric conductivity of ink composition six months after manufacture | 90 nS/m | 87 nS/m | 98 ns/m | 80nS/m |
| Variation of electric conductivity of ink composition | 5 nS/m | 3 nS/m | 2 nS/m | 20 nS/m |
| Electric conductivity of charged particles just after manufacture | 65 nS/m | 60 nS/m | 80 nS/m | 70 nS/m |
| Electric conductivity of charged particles six months after manufacture | 61 nS/m | 58nS/m | 79 nS/m | 55 nS/m |
| Variation of electric conductivity of charged particles | 4 nS/m | 2 nS/m | 1 nS/m | 15 nS/m |

From the results shown in Table 1, it can be seen that the ink compositions according to the invention subjected to heat treatment process are very small in the variation of the quantity of electric charge during the time between just after manufacture and after preservation of the ink composition as compared with that in comparative example. Therefore, the ink compositions obtained according to the invention have excellent ink jet recording property.

While the invention has been described in detail and with reference to specific embodiments thereof, it will be apparent to one skilled in the art that various changes and modifications can be made therein without departing from the spirit and scope thereof.

The present application claims foreign priority based on Japanese Patent Application No. JP2004-271188, filed September 17 of 2004, the contents of which is incorporated herein by reference.

## Claims

1. A method of manufacturing an ink composition, which has a coefficient of viscosity of from 0.5 to 50 mPa·s at 20°C comprising:
dispersing a coloring material in a dispersion medium to provide a dispersion;
adding an electric charge generator to the dispersion to form charged particles; and
heating the dispersion after the adding of the electric charge generator.

2. The method of manufacturing an ink composition according to claim 1, wherein the heating is performed at a temperature of 35 to 150°C.

3. The method of manufacturing an ink composition according to claim 1, wherein the heating is performed for 1 minute to 10 hours.

4. The method of manufacturing an ink composition according to claim 1, wherein the coloring material is a coloring material covered with a covering agent.

5. The method of manufacturing an ink composition according to claim 1, wherein the dispersion is performed in the presence of a dispersant.

## Patentansprüche

1. Verfahren zur Herstellung einer Tintenzusammensetzung, die einen Viskositätskoeffizienten von 0,5 bis 50 mPa·s bei 20°C aufweist, umfassend:
Dispergieren eines färbenden Materials in einem Dispersionsmedium, um eine Dispersion bereitzustellen;
Zufügen eines Erzeugers elektrischer Ladung, zu der Dispersion, um geladene Teilchen zu erzeugen; und
Erwärmen der Dispersion nach dem Zusetzen des Erzeugers elektrischer Ladung.

2. Verfahren zur Herstellung einer Tintenzusammensetzung gemäß Anspruch 1, wobei das Erwärmen bei einer Temperatur von 35 bis 150°C durchgeführt wird.

3. Verfahren zur Herstellung einer Tintenzusammensetzung gemäß Anspruch 1, wobei das Erwärmen 1 Minute bis 10 Stunden lang durchgeführt wird.

4. Verfahren zur Herstellung einer Tintenzusammensetzung gemäß Anspruch 1, wobei das färbende Material ein mit einem Bedeckungsmittel bedecktes färbendes Material ist.

5. Verfahren zur Herstellung einer Tintenzusammensetzung gemäß Anspruch 1, wobei die Dispersion in Gegenwart eines Dispergiermittels hergestellt wird.

## Revendications

1. Procédé de fabrication d'une composition d'encre, qui a un coefficient de viscosité de 0,5 à 50 mPa·s à 20 °C comprenant les étapes consistant à:
disperser une matière colorante dans un milieu de dispersion pour réaliser une dispersion ;
ajouter un générateur de charge électrique à la dispersion pour former des particules chargées ; et
chauffer la dispersion après l'ajout du générateur de charge électrique.

2. Procédé de fabrication d'une composition d'encre selon la revendication 1, dans lequel le chauffage est effectué à une température de 35 à 150 °C.

3. Procédé de fabrication d'une composition d'encre selon la revendication 1, dans lequel le chauffage est effectué pendant 1 minute à 10 heures.

4. Procédé de fabrication d'une composition d'encre selon la revendication 1, dans lequel la matière colorante est une matière colorante recouverte d'un agent de couverture.

5. Procédé de fabrication d'une composition d'encre selon la revendication 1, dans lequel la dispersion est effectuée en présence d'un dispersant.
